# EUROPÄISCHE PATENTANMELDUNG

(11) **EP 1 122 697 A1**
(43) Veröffentlichungstag der Anmeldung: **08.08.2001**
(21) Anmeldenummer: 00102379.5
(22) Anmeldetag: 04.02.2000
(51) Int. Cl.: G07F 19/00

(54) **Terminalauswahl bei Benutzung durch mobile Bedienteile**

(71) Anmelder: Wincor Nixdorf GmbH & Co KG, 33106 Paderborn (DE)
(72) Erfinder: Kremer, Holger, 33175 Bad Lippspringe (DE); Glaschick, Rainer, 33106 Paderborn (DE)

(57) **Zusammenfassung**

Sicherung einer über ein Nahfeldfunknetz bewirkten Verbindung von einem mobilen Bedienteil zu einem Terminal, wobei eine von dem Nahfeldfunknetz unabhängige Kontrollausgabe des Terminals oder Bedienteils an den Benutzer derselben verwendet wird.

## Beschreibung

### Technisches Gebiet

Die Erfindung betrifft die Bedienung von Selbstbedienungssystemen, insbesondere von Transaktionsterminals, durch mobile Bedienteile, die über Nahfeldfunknetze angeschlossen sind.

### Stand der Technik

Selbstbedienungssysteme oder andere Transaktionsterminals, inbesondere Geldausgabeautomaten, benötigen Ein- und Ausgabeeinrichtungen, mit dem die das Selbstbedienungssystem benutzende Person, im folgenden Bediener genannt, eine Transaktion steuert. Als Ausgabeeinrichtungen werden bevorzugt Bildschirme in verschiedenen Ausprägungen verwendet. Als Eingabeeinrichtungen dienen entweder berührungsempfindliche Bildschirme oder Tastaturen. Ferner wird häufig eine Einrichtung benötigt, mittels derer die Identität bzw. Authentizität der Bedienperson geprüft und verifiziert wird. Hierzu dient in der Regel ein Kartenleser, der bislang überwiegend mit Magnetstreifenkarten arbeitet. Die Autorisierung einer Bedienperson wird dadurch erreicht, daß die Bedienperson eine Geheimzahl (PIN) eingeben muß, die zu der gelesenen Karte paßt. Gerade Kartenleser und Tastatur jedoch sind durch Vandalismus gefährdet und Ausgangspunkte einer Reihe von Versuchen, an die Kombination von Geheimzahl und Magnetsteifenkarte zu gelangen.

In der Offenlegungsschrift WO 97/14121 wird ein tragbares Gerät zur Abwicklung von Transaktionen mit einem Transaktionsterminal vorgeschlagen. Das Gerät kann insbesondere verschiedene Arten von Chip- oder Magnetstreifen-Karten kontaktlos mit einem Transaktionsterminal koppeln. Für die kontaktlose Kopplung ist eine Infrarot-Verbindung, insbesondere nach dem IrDA-Standard, vorgesehen. Das tragbare Gerät stellt damit eine einheitliche Schnittstelle für Chip- und Magnetstreifenkarten zur Verfügung. Dabei können die Daten auch direkt in dem tragbaren Gerät gespeichert sein, welches dann die Chip- oder Magnetkarte vollständig ersetzt. Damit kann dann, als 'mode direct' bezeichnet, eine Transaktion durch das tragbare Gerät ausgeführt werden. Zur Einleitung solcher Transaktionen sendet das Transaktionsterminal regelmäßig über eine Infrarot-Schnittstelle, insbesondere nach dem IrDA-Standard, eine unspezifische Anfrage aus. Der Benutzer bringt sein tragbares Gerät in eine Koppelposition vor das Transaktionsterminal und aktiviert sein Gerät, welches dann auf die nächste Anfrage reagiert und so eine Verbindung mit dem Transaktionsterminal herstellt, bei der das Terminal der Master und das tragbare Gerät der Slave ist. Dabei bewirken Richtwirkung und beschränkte Reichweite der Infrarotkopplung, daß eine Störung zu benachbarten Terminals und deren Benutzern nicht möglich ist und jeweils sichergestellt ist, daß die Kommunikation zwischen den richtigen Geräten stattfindet. Daher ist die Benutzung von Nahfeld-Funknetzwerken anstelle der vorgeschlagenen Infrarotverbindung nicht ohne weiteres möglich.

Aufgabe der Erfindung ist es, eine Lösung für eine Verbindung eines transportablen Bedienteils mit einem Terminal für Transaktionen mittels einer ungerichteten bzw. nicht auf die Dimensionen des Terminals beschränkten drahtlosen Verbindung anzugeben.

Ferner ist es Aufgabe der Erfindung, einfache Maßnahmen gegen das in der Computersicherheit als "man-in-the-middle attack" bekannte Problem anzugeben, bei der sich ein Dritter in die Kommunikation zwischen zwei Partnern ohne deren Wissen als Vermittler einschaltet. Die dort bekannten Verfahren verwenden komplexe kryptographische Protokolle und setzen insbesondere voraus, daß beide Partner vorab Informationen über ihre Identität, insbesondere im Rahmen eines Key-Management ausgetauscht haben.

### Darstellung der Erfindung

Die Erfindung geht von der Erkennnis aus, daß das wesentliche Problem in dem Verbindungsaufbau liegt, bei dem eine Auswahl aus mehreren betriebsbereiten Terminals erfolgen muß und der die Bedieneinheit benutzende Benutzer vor Abschluß der Transaktion sicher sein muß, mit dem "richtigen" Terminal verbunden zu sein. Beispielsweise ist es nicht möglich, daß erst mit der Ausgabe eines Geldbetrags der Benutzer durch Nachzählen feststellt, daß er das richtige Terminal bedient hat. Gleiches gilt auch dann, wenn auf dem Terminal vertrauliche Information angezeigt wird. Die Erfindung umfaßt daher das Merkmal, daß über eine von dem Nahbereichsnetzwerk unabhängige Kontrollausgabe, insbesondere optischer Art, dem Benutzer die Verbindung quittiert wird.

Es handelt sich also um die Sicherung einer über ein Nahfeldfunknetz bewirkten Verbindung von einem mobilen Bedienteil zu einem Terminal, wobei eine von dem Nahfeldfunknetz unabhängige Kontrollausgabe des Terminals oder Bedienteils an den Benutzer derselben verwendet wird.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

### Kurzbeschreibung der Zeichnungen

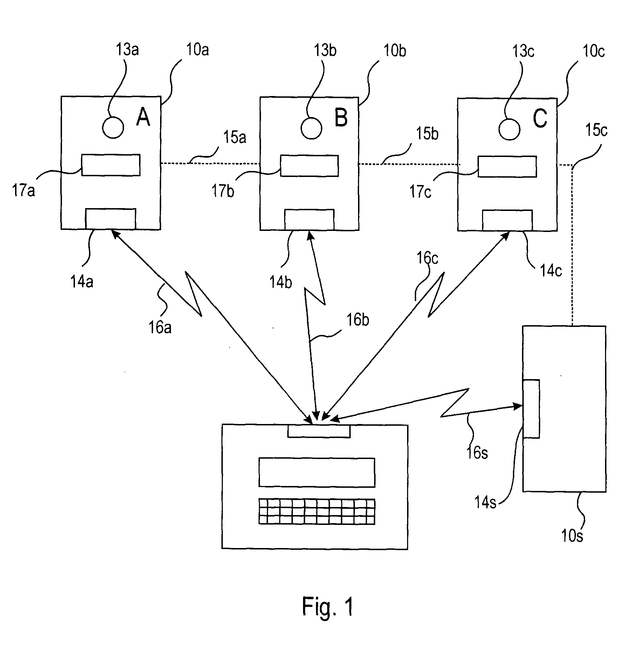

Es zeigen
- Fig. 1: eine schematische Darstellung der Erfindung.

### Beschreibung einer Ausführungsform der Erfindung

In Fig. 1 ist schematisch eine typische Ausgestaltung einer ersten Ausführungsform der Erfindung gezeigt. Hier sind drei Terminals 10a, 10b, 10c dargestellt, die jeweils über ein Netzwerkanschluß 14a, 14b, 14c für ein Nahfeld-Funknetzwerk aufweisen. Ferner ist gezeigt ein Server 10s, der gleichfalls ein Netzwerkanschluß 14s für dasselbe Nahfeld-Funknetzwerk aufweist. Ein typisches Nahfeld-Funknetzwerk, welches gleichfalls bevorzugt verwendet wird, ist unter dem Namen "Bluetooth" bekannt; eine Spezifikation und weitere Information kann unter der URL "http://www.bluetooth.com" abgerufen werden. Die Terminals 10a, 10b, 10c können freistehend angeordnet sein oder in eine Wand eingebaut sein, so daß nur die im folgenden benötigten Bedienelemente sichtbar sind. Dies können zum Beispiel Geldausgabe-Schlitze 17a, 17b, 17c sein, die in Fig. 1 entsprechend angedeutet sind. Der Server 10s ist in der Regel unsichtbar angeordnet. Die Funktion des Servers 10s kann auch von einem der Terminals 10a, 10b, 10c wahrgenommen werden. Die Terminals 10a, 10b, 10c und der Server 10s sind untereinander durch beliebige Datenkommunikationsmittel 15a, 15b, 15c verbunden. Bevorzugt wird hierfür auch das Nahfeld-Kommunikatinsnetzwerk verwendet; dies ist aber nicht notwendig und daher nur durch die gestrichelten Linien in Fig. 1 angedeutet.

Ferner ist in Fig. 1 gezeigt ein tragbares, in der Regel durch Batterien gespeistes Bedienteil 20 mit einer Tastatur 23, einer Anzeige 22 und gleichfalls einem Netzwerkanschluß 21. Dieses Bedienteil 20 kann demgemäß, wie durch die Blitzpfeile 16a, 16b, 16c, 16s angedeutet, mit jedem der Terminals 10a, 10b, 10c und dem Server 10s kommunizieren. Üblicherweise haben in einem Netzwerk die Teilnehmer eine eindeutige Geräteadresse, die bei Ethernet und Bluetooth vom Hersteller vergeben wird und danach nicht mehr verändert wird. Bei Ethernet liegt darüber ein Adress-Auflösungs-Protokoll, mit dem die Adresse der unteresten Ebene einer IP-Adresse assoziiert wird. Ähnliche Maßnahmen finden sich auch in Bluetooth, wie in allen ungerichteten Netzwerken und insbesondere Funknetzwerken. Für die nachfolgene Beschreibung ist es nicht von Bedeutung, auf welcher Ebene die Netzwerk-Adresse aufgelöst wird, solange sie für ein Gerät eindeutig ist.

In der ersten Ausführungsform beginnt das Verfahren damit, daß das Bedienteil 20, in der Regel auf Initiative des das Bedienteil bedienenden Benutzers (nicht gezeigt), eine Nachricht an den Server 10s unter Verwendung der logischen Netzwerkverbindung 16s sendet. Hierbei wird eine vorbestimmte, für diesen Zweck reservierte, Netzwerkadresse verwendet, beispielsweise die IP-Adresse 192.168.1.1, die eigentlich für nicht mit dem Internet verbundene lokale Netzwerke reserviert ist. Alternativ kann eine symbolische Adresse wie "local.transaction.net" verwendet werden, die durch ein weiteres Protokoll in eine Netzwerk-Adresse gewandelt werden, wie dies beispielsweise in dem Domain-Namen-System (DNS) des Internet der Fall ist. Dazu muß dann jedoch eine vorab festgelegte Adresse für den zugehörigen Namensdienst bestimmt sein. Im bevorzugt verwendeteten Bluetooth-Protokoll sind Profile definiert, mittels derer die Bedieneinheit einen Server für die im folgenden besprochenen Dienste auffinden kann und diesen dann verwendet. Auch in diesem Fall ist die Adresse des Servers vorbestimmt, wenn auch als Profilklasse.

Das Verfahren der ersten Ausführungsform beginnt also damit, daß das Bedienteil dem Server eine Anfrage sendet. In dieser Anfrage ist - explizit oder implizit, je nach Netzwerk und Protokoll - ein Rückadresse enthalten, mittels derer der Server antworten kann. Der Server antwortet damit, daß er zumindest die Adresse eines betriebsbereiten und für eine neue Transaktion freien Terminals zurücksendet. Bevorzugt sendet der Server eine Liste mit Terminal-Netzwerk-Adresse, Zustandsinformation wie 'belegt' oder 'frei' und weiteren Daten zurück. An die Zustandsinformation gelangt der Server über die anderen Netzwerkverbindungen 15a, 15b, 15c. Dabei kann der Server bei jeder Anfrage diese Information aktuell bei den Terminals abfragen. Bevorzugt senden die Server bei Statuswechsel, spätestens nach einer vorgegebenen Zeit von beispielsweise 5 Minuten, den neuen Zustand an den Server.

Ferner sind bei den Terminals in Fig.1 die Buchstaben A, B und C dargestellt. Sie symbolisieren Zeichenketten, die das Terminal in der jeweiligen Umgebung identifizieren und in der Regel auch auf dem Terminal gut von ferne sichtbar vermerkt sind. Dies können einfach, wie hiermit angedeutet, Großbuchstaben oder Ziffen sein. Es ist aber gleichfalls möglich, die Terminals alternativ oder zusätzlich durch unterschiedliche Farben oder andere Gestaltung eines Teils der dem Benutzer sichtbaren Teile, graphische Symbole wie Rechteck, Dreieck und Kreis oder figürliche Darstellungen von Tieren, Pflanzen oder anderen jedermann bekannten und unterscheidbaren Gegenständen sein. Gleichfalls möglich sind Koordiaten der Terminals, wobei dann bevorzugt zusätzlich eine Karte des Raums mit übertragen wird, so daß das Bedienteil die Terminals auf einer Karte als frei oder belegt markieren kann. Bevorzugt enthält die Anfrage eine Angabe, welche Arten dieser Bezeichnungen von dem Bedienteil ausgewertet werden können, um nur diese zu übertragen. Diese, für den Bediener optisch unterscheidbare Bezeichnung des Terminals, ist bevorzugt gleichfalls in der Anwort enthalten, um den nachfolgenden Schritt, wenn er denn von dem Benutzer ausgeführt wird, zu erleichtern. Selbstverständlich kann der Server auch lediglich eines der freien Terminals auswählen und nur diese Information an das Bedienteil zurückschicken. Ein Verbindungsaufbau ist hierbei im übrigen nicht notwendig, so daß für diesen Zweck Datagramme, beispielsweise nach dem UDP-Protokoll, zweckmäßig sind, weil sie im Server keine Betriebsmittel blockieren.

Das Bedienteil erhält also auf seine Anfrage hin entweder eine Antwort, die kein freies Terminal anzeigt, oder eine Antwort mit genau einem freien Terminal oder eine Auswahlliste, in der die Terminals aufgeführt sind. In dieser Antwortliste sind, sofern vorhanden, die Bezeichnungen der Terminals enthalten, so daß der Benutzer das ausgewählte Terminal bereits 'ins Auge fassen' kann. Je nach Ausführung des Bedienteils und seiner Möglichkeiten ist es auch denkbar, daß dem Benutzer gar keine Auswahl angeboten wird, sondern einfach das erste freie Terminal der Liste automatisch ausgewählt wird; dies kann auch eine Option sein, die, vom Benutzer vorgewählt, mit der Anfrage an den Server gesendet wird.

Auf jeden Fall ist jetzt die Netzwerkadresse eines freien, d.h. für den Benutzer benutzbaren, Terminals im Bedienteil bekannt. Das Bedienteil öffnet nun einen Kommunikationskanal mit diesem Terminal, wobei eines der in dem jeweiligen Netzwerk möglichen Verfahren gewählt wird. Über diesen Kommunikationskanal wird nun, bevor die Transaktionen begonnen werden, eine Nachricht geschickt, die das Terminal zu einer Kontrollausgabe veranlaßt, die nicht über das drahtlose Nahfeld-Netzwerk erfolgt. Am einfachsten ist eine in Fig. 1 angedeutete Signallampe 13a, 13b, 13c. Dies kann beispielsweise bei einem freien Terminal ausgeschaltet sein und bei einem belegten Terminal rot leuchten. Ist der Kommunikationskanal wie ausgeführt soeben eröffnet, so wechselt diese Signallampe 13a, 13b, 13c bei dem betreffenden Terminal auf grün. Der Bediener begibt sich unter Mitnahme seines Bedienteils zu diesem Terminal und sendet, dort angekommen oder zuvor, über sein Bedienteil ein Quittungssignal, womit die Signallampe auf rot wechselt. Bevorzugt wird in diesem Fall entweder über den Server oder ein anderes Protokoll der Terminals untereinander dafür gesorgt, daß stets nur ein Terminal die grüne Signallampe zeigt, so daß mehrere Benutzer, die gleichzeitig Zugang zu einem Transaktionsterminal haben wollen, aufeinander warten müssen und so die Geräte nicht verwechseln. Besonders einfach ist eine Lösung, bei der der Server immer nur eine Anfrage beantwortet und das Terminal dem Server die Wechsel der Betriebszustände, die die Farbe der Signallampen umfassen, jeweils mitteilt. Dies ist, wie oben dargelegt, ohnehin vorgesehen.

Eine Verbesserung der Erfindung benutzt bei dem Aufbau der Verbindung von dem Bedienteil zu dem Terminal eine auf den Benutzer bezogene persönliche, in der Regel jedoch nicht vertrauliche, Information. Das kann im einfachsten Fall dessen Name oder seine Telefonnummer sein. In diesem Fall ist die Anzeige 13a, 13b, 13c als alphanumerische Anzeige ausgebildet, auf der das Terminal die übermittelte Information anzeigt. Dies kann im Rahmen eines Begrüßungsbildschirms geschehen. Falls mehrere Benutzer gleichzeitig ein Terminal benutzen wollen, wird dann bei falscher Wahl der Benutzer sofort erkennen, daß die persönliche Information nicht zu ihm gehört, und die Transaktion abbrechen. Anstelle von alphanumerischen Zeichenketten kann selbstverständlich ein Bild, entweder vom Benutzer selbst oder ein graphisches Symbol, verwendet werden, welches dann auf der dann als graphische Anzeige ausgebildeten Anzeige 13a, 13b, 13c dargestellt wird. Bei einer Variante der Erfindung wird in dem Bedienteil eine Zeichenkette oder ein Symbol zufällig ausgewählt und gleichzeitig auf dem Terminal als auch auf dem Bedienteil angezeigt, so daß der Benutzer lediglich beurteilen muß, ob beide optisch gleich sind. Dies ist selbstverständlich auch bei festen Zeichenketten oder Bildern möglich, damit der Benutzer nicht überlegen muß, welche er denn gewählt hat.

Anstelle von oder zusätzlich zu einer optischen Kontrollausgabe, wie sie bislang beschrieben wurde, kann auch eine akustische Kontrollausgabe verwendet werden, möglicherweise mit einem Umsetzer von alphanumerischen Texten in Sprache. Genausogut kann der Benutzer eine Klangdatei bei dem Aufbau der Verbindung mitsenden und von dem Terminal abspielen lassen. Wahrscheinlich weniger erfolgreich dürfen Kontrollausgaben für die weiteren Sinne des Menschen sein, auch wenn diese von der Erfindung mit umfaßt sein sollen.

Bei einer Variante der Erfindung sendet wie gehabt das Bedienteil über das Netzwerk einen Identifikator, der bevorzugt durch eine Zufallsauswahl bestimmt oder modifiziert ist. Es kann sich um eine Zufallszahl oder ein aus einer Anzahl von zuvor bereitgestellten Wörtern oder Bildzeichen bestimmten Identifikator handeln. Das Terminal zeigt diesen an. Der Benutzer gibt sodann den Identifikator in sein Bedienteil ein, welches dann Gleichheit überprüft. Die Eingabe kann auch eine Auswahl aus dem gesendeten und einer Anzahl von anderen Identifikatoren sein.

Eine andere Möglichkeit besteht darin, eine drahtlose Kontrollausgabe des Terminals zu benutzen, die nicht von den Sinnen des Benutzers unmittelbar erfaßt werden kann, insbesondere durch Verwendung von Infrarotlicht. Hierbei werden bevorzugt Zufallszahlen verwendet, die vom Bedienteil beim Verbindungsaufbau über das Nahbereichsnetzwerk verschickt werden und als Antwort über die Infrarotverbindung erwartet werden, bevor die weiteren Transaktionen freigegeben werden. Hierfür ist sicherlich sowohl eine Infrarotverbindung nach dem IrDA Standard möglich, wie auch eine weniger leistungsfähige Verbindung, da es ausreichend sein dürfte, eine weniger als zehnstellige Zahl zu übermitteln. Falls das Bedienteil statt dessen über ein Mikrophon verfügt, kann auch ein Tonsignal im Hör- oder Ultraschallbereich verwendet werden. In allen diesen Fällen ist jedoch darauf zu achten, daß dieses Signal zumindest eine geringe Reichweite hat und nur dann empfangen werden kann, wenn der Bediener sich mit seinem Bedienteil unmittelbar vor dem Terminal befindet.

Ist die Verbindung aufgebaut und durch eines der beschriebenen Mittel verifiziert, dann kann eine Bedienung des Terminals über das Bedienteil erfolgen. Hierzu wird bevorzugt die Kommunikation über das Nahbereichs-Netzwerk verschlüsselt, um Mithören oder Verfälschen zu unterbinden. Dabei wird ein Nahbereichs-Netzwerk nach dem Bluetooth-Standard bevorzugt, da dieser bereits eine Verschlüsslung einer Verbindung sowie die Bildung von geschlossenen Teilnetzen ('pico-net') unterstützt. Zwar ist ein Schlüsselmanagement nicht im Bluetooth-Standard enthalten; da jedoch ohnehin eine weitere Authentisierung, gegebenenfalls mittels einer Chipkarte im Bedienteil, notwendig ist, kann im Rahmen dieser Authentisierung auch ein Einmal-Verbindungsschlüssel gebildet und verwendet werden. Hierzu ist in der Literatur eine reiche Auswahl von Verfahren zu finden. Eine besonders einfache Möglichkeit besteht darin, daß das Bedienteil bereits bei der Anmeldung eine Zufallszahl erzeugt, die dann zusammen mit dem persönlichen Identifikator, wie oben beschrieben, zur Bildung des Verbindungsschlüssels herangezogen wird.

In einer alternativen Ausführungsform wird ein wechselnder Identifikator nicht von dem Bedienteil, sondern von dem Terminal bereitgestellt und an das Bedienteil geschickt und von beiden angezeigt. Dies kann eine Zufallszahl oder, besser, eine zufälliges Wort sein, das gesprochen wie ein Wort in der jeweiligen Landessprache klingt, d.h. eine passende Kombination von Vokalen und Konsonanten in den entsprechenden Sprachen aufweist. Passende Verfahren sind für die Bereitstellung von synthetischen Paßwörtern bekannt.

In einer anderen Variante wird ein wechselnder Identifikator vom Terminal bereitgestellt und dort angezeigt, bevorzugt als Zufallszahl von beispielsweise sechs Dezimalziffern, codiert als 48 Bit, aber entsprechend einem Informationsgehalt von 17 Bit. Der Benutzer liest diese und gibt sie in die Tastatur des Bedienteils ein; sie wird nicht über das Nahbereichsnetzwerk übertragen. Sowohl Terminal als auch Bedienteil verwenden diese Zufallszahl oder eine daraus abgeleiteten Wert als Schlüssel für eine verschlüsselte Kommunikation. Im einfachsten Fall signieren Terminal oder Bedienteil eine bekannte Zeichenkette wie die eigene und fremde Netzwerkadresse durch Verschlüsslung, wobei der Empfänger nach Entschlüsslung Übereinstimmung feststellt. Bekannte Challenge-Response Verfahren zur Identitätsüberprüfung sind gleichfalls anwendbar, bei denen der Sender eine Zufallszahl verschlüssel, der Empfänger diese entschlüsselt, um eins erhöht, erneut verschlüsselt und zurückschickt. Bevorzugt jedoch wird dieser Erstschlüssl nur einmal verwendet. Beispielsweise berechnet das Terminal einen Sitzungschlüssel für die weitere Kommunikation, in der Regel als Zufallszahl einer wesentlich größeren Zahl von Bits als der Erstschlüssel, verschlüsselt diesen mit dem Erstschlüssel und schickt das Ergebnis an das Bedienteil. Dieses kann den Sitzungsschlüssel mittels der vom Benutzer manuell eingegebenen Erstschüssels entschlüsseln und für die weitere Kommunikation verwenden. Da der Erstschlüssel nur einmalig zur Verschlüsslung einer Zufallszahl verwendet wird und einem Angreifer nicht bekannt ist, kann dieser mangels Information den übertragenen Sitzungsschlüssel nicht bestimmen. Dabei ist es unerheblich, ob das Terminal oder das Bedienteil den Sitzungsschlüssel erzeugt; das Terminal ist bevorzugt, weil es meist die höhere Rechenkapazität hat. Bei der Verwendung von Bluetooth enthält das Protokoll bereits die Verschlüsslung von Verbindungen, bietet aber keine Schlüsselverwaltung. Diese wird auf einfache Art durch die Erfindung in dieser bevorzugten Ausprägung bereitgestellt. Daher sei die Anwendung der Erfindung in dieser Art noch einmal dargestellt: Der Benutzer betritt den Bereich der Terminals; sein Bedienteil sendet eine Anfrage und bekommt einen oder mehrere Terminals angezeigt. Er geht zu einem dieser Terminals, liest die gegen Fremdeinblick geschützte Einmal-Transaktionsnummer und gibt sie in sein Bedienteil ein. Kommt die Kommunikation zustande, ist der Bediener sicher, daß sein Bedienteil mit genau dem Terminal, vor welchem er steht, kommuniziert und daß diese Kommunikation sicher ist. Dabei kann der Benutzer völlig anonym bleiben; es ist weder ein Schlüsselaustausch vorab noch irgendein Verzeichnis von öffentlichen Schlüsseln notwendig.

Nach Abschluß der Transaktion werden die Netzwerkverbindungen abgebaut, und das Terminal geht wieder in einen freien Zustand über.

Als Server kann in einer Variante der Erfindung auch ein Server für das WAP-Protokoll dienen. Das WAP-Protokoll ist dafür gedacht, anstelle des bislang im WEB benutzen Kombination von HTTP als Protokoll und HTML als Darstellungssprache vergleichbare Information bei geringeren Anforderungen an Display und Navigatinseingaben zuzulassen. Insbesondere sind in WAP Auswahllisten vorgesehen.

Wie bereits oben erwähnt, muß der Server keinesfalls eine eigene physikalische Einheit sein, sondern kann als Rolle von jedem der Terminals übernommen werden. Die Rechenleistung moderner Prozessoren ist so hoch, daß ein solcher problemlos gleichzeitig die Abwicklung einer Transaktion steuern als auch als Server dienen kann. In diesem Fall senden die Terminals nicht nur ihren jeweiligen Status zum Server, sondern erwarten auch eine Antwort, die anzeigt, daß der Server betriebsbereit ist. Sollte diese ausbleiben, wird, entweder mit festen Prioritäten oder durch ein zufalls-basiertes Arbitrierungsverfahren einem anderen Terminal die Rolle des Servers gegeben.

Optimal ist in diesem Fall, sofern das Netzwerk die Verwendung von migrierenden Adressen zuläßt, eine Variante, bei der stets ein freies Terminal die Rolle des Servers übernimmt. Dieses bekommt die vorbestimmte, von jedem Bedienteil verwendete Netzwerkadresse zugewiesen und reagiert damit auf die Erstanfrage der Bedienteile. Gerade bei Verwendung von Datagrammen kann das jeweils als Server fungierende Terminal durchaus auf mehrere Bedienteile antworten, bis es durch die genannten Abläufe belegt ist. Vorzugsweise wird das Terminal bereits mit dem Beginn des Verbindungaufbaus von einem Bedienteil die Server-Funktion an das nächste freie Terminal weitergeben. Zweckmäßig führt der jeweilige Server eine Liste der freien Terminals, die er dann an den neuen Server weitergibt. Problemlos kann die Benachrichtigung eines Zustandswechsels auch die vorbestimmte Netzadresse verwenden, mit der das Bedienteil die Erstabfrage absendet. In dieser Ausführungsform sendet also jedes Terminal jeden Zustandswechsel an die vorbestimmte Adresse; es muß nicht seinerseits mithalten, welches die eindeutige Netzwerkadresse dieses Terminals ist. Durch Statusabfrage an diese Adresse kann jedes freie Terminal sicherstellen, daß ein Server funktionsfähig ist und, sofern diese nicht oder nicht richtig beantwortet werden, selbst diese Rolle übernehmen.

Falls, wie es in den meisten Nahbereichsnetzwerken der Fall ist, ein Rundruf ('broadcast') möglich ist, kann auf die Server-Rolle vollständig verzichtet werden. In dieser Variante der Erfindung sendet das Bedienteil einen Rundruf aus. Ob dies durch reservierte Adressen oder durch Varianten in dem Kommunikationsverfahren realisiert wird, ist zweitrangig. Es stellt jedenfalls gleichfalls eine Sendung an eine vorbestimmte Adresse dar. Diese Sendung enthält einen Code, daß ein freies Transaktionsterminal, gegebenenfalls eines bestimmten Typs, gesucht ist. Hierauf melden sich alle freien Terminals und senden ihre Adresse zurück. Es ist auch möglich, daß auch die besetzten Terminals antworten und ihren Zustand in der Antwort mit angeben; dann ist ein ähnliches Verhalten wie oben für den Server beschrieben vorzusehen, bei dem dieser eine Liste auf die Erstanfrage hin geschickt hat. Selbstverständlich wird bevorzugt auch hier Information über das jeweilige Terminal, oben und in Fig. 1 als Buchstaben A, B und C symbolisiert, mitgeschickt.

Wenn, wie es regelmäßig zu erwarten ist, meherere Terminals gleichzeitig auf den Rundruf antworten, dann kann dieser Konflikt einerseits durch die im Netzwerk für Kollisionen ohnehin vorgesehenen Maßnahmen behandelt werden. Hierzu sei angemerkt, daß die Anwort auf den Rundruf nicht ein erneuter Rundruf, sondern in der Regel ein Datagramm an das Bedienteil ist, das zu diesem Zweck seine eindeutige Netzwerkadresse in dem die Erstanfrage darstellenden Rundruf codiert hat. Wenn allerdings die freien Terminals mit einem Datagramm anworten, so ist nicht sichergestellt, daß diese das Bedienteil auch erreichen, da die Kollisionsgefahr in der Antwort auf Rundrufe besonders hoch ist. Daher sollte von vornherein ein vom Terminal abhängige Verzögerung bei der Antwort vorgesehen sein. Diese kann sowohl nondeterministisch aus einer Zufallszahl oder auch aus der Adresse bzw. Nummer des Terminals abgeleitet sein. Auch könnte die Verzögerungszeit umso kürzer sein, je länger das Terminal wieder frei ist. Ferner wird in einer Weiterbildung der Erfindung die Leistungsfähigkeit des Terminals mit berücksichtigt. Bei einem Geldausgabeautomaten könnte diese der Vorrat an Bargeld sein, der die so gebildetete Priorität beeinflusst. Beispielsweise beträgt die Basisverzögerung unmittelbar nach dem Freiwerden 1000 msec und wir für jede weitere Minute um eins, zwei oder drei bei kleinem, mittlerem oder großem Vorrat an Bargeld vermindert.

Da die Terminals in dieser Variante der Erfindung nicht untereinander kommunizieren, ist sie auch für Terminals unterschiedlicher Anbieter geeignet, für die die Einigung auf einen gemeinsamen Server immer zusätzlichen Aufwand darstellt. Auf jeden Fall wird in solchen Anwendungen die Erstanfrage eine Profilangabe enthalten, damit der Benutzer, der einen Geldausgabeautomaten wünscht, keinen Automaten für Getränke angeboten bekommen. In diesem Umfeld ist auch ersichtlich, daß eine Auswahlliste von Terminals mit deren Beschreibungen durchaus nützlich sein kann.

## Patentansprüche

1. Verfahren zur drahtlosen Nahbereichsverbindung eines tragbaren Bedienteils mit einem von potentiell mehreren, für die Benutzung freien Terminals, mit den folgenden Schritten:
- Das Bedienteil sendet eine Erstanfrage an eine vorbestimmte Zieladresse,
- das Bedienteil empfängt eine Antwort, die mindestens eine Netzwerkadresse eines freien Terminals enthält,
- das Bedienteil baut mittels der Netzwerkadresse eine Verbindung zu dem Terminal auf, über die ein Identifikator gesendet wird,
- der Identifikator wird von dem Bedienteil oder Terminal über eine von dem Nahbereichsnetzwerk unabhängige Kontrollausgabe ausgegeben.

2. Verfahren nach Anspruch 1, wobei die Erstanfrage als unspezifischer Rundruf an alle Terminals gesendet wird und mindestens ein freies Terminal eine Antwort sendet, die seine eigene Adresse enthält.

3. Verfahren nach dem voherigen Anspruch, wobei die Antwort eines Terminals abhängig von einer Zufallszahl oder der Leistungsfähigkeit verzögert erfolgt.

4. Verfahren nach dem vorigen Anspruch mit einem Terminal für die Ausgabe von Gegenständen, wobei bei der Leistungsfähigkeit der Vorrat an Gegenständen berücksichtigt wird.

5. Verfahren nach Anspruch 1, wobei die Erstanfrage an einen Server gesendet wird, welcher von den Terminals zumindestens bei Wechsel von frei nach belegt eine Nachricht enthält.

6. Verfahren nach dem vorherigen Anspruch, wobei die Funktion des Servers durch eines der Terminals wahrgenommen wird.

7. Verfahren nach einem der beiden vorherigen Ansprüche, wobei das Terminal neben dem Zustand auch seine Leistungsfähigkeit an den Server überträgt und dieser diese in die Antwort aufnimmt oder die Reihenfolge der Terminals in der Antwort danach bestimmt.

8. Verfahren nach Anspruch 6, wobei die Funktion des Servers an ein jeweils freies Terminal weitergegeben wird.

9. Verfahren nach einem der vorherigen Ansprüche, wobei die Antwort eine dem Bediener verständliche Bezeichung des Terminals enthält.

10. Verfahren nach dem vorigen Anspruch, wobei das Terminal mit der jeweiligen Bezeichung deutlich sichtbar markiert ist.

11. Verfahren nach einem der vorherigen Ansprüche, wobei die Kontrollausgabe zum Terminal gehörig ist und eine Signallampe, eine alphanumerische Anzeige oder eine graphische Anzeige ist.

12. Verfahren nach dem vorherigen Ansprüche, wobei der Server oder eine Kommunikation der Terminals untereinander sicherstellt, daß stets nur eine Kontrollanzeige aktiv ist, bis diese von dem Benutzer quittiert wurde.

13. Verfahren nach einem der Ansprüche 1-9, wobei die Kontrollausgabe zum Bedienteil gehörig ist und eine alphanumerische Anzeige oder eine graphische Anzeige ist.

14. Verfahren nach einem der vorhergehenden Ansprüche, wobei der Identifikator eine personenbezogene, nicht vertrauliche Information ist.

15. Verfahren nach einem der Ansprüche 1 bis 11, wobei der Identifikator ein zufällig ausgewähltes Symbol, Zeichenketten eingeschlossen, ist, welches sowohl auf dem Terminal als auch dem Bedienteil angezeigt und auf einem von beiden vom Benutzer quittiert wird.

16. Verfahren nach einem der Ansprüche 1 bis 11, wobei der Identifikator durch ein Zufallsverfahren ausgewählt, auf dem Terminal bzw. Bedienteil angezeigt wird, von dem Terminal bzw. Bedienteil an das Bedienteil bzw. Terminal geschickt wird und dort zur Kontrolle eingegeben wird.

17. Verfahren nach einem der Ansprüche 1 bis 11, wobei der Identifikator im Bedienteil durch ein Zufallsverfahren ausgewählt, an das Terminal geschickt, vom Terminal dem Benutzer angezeigt und vom Benutzer in das Bedienteil eingegeben wird.

18. Verfahren nach einem der Ansprüche 1 bis 11, wobei der Identifikator im Terminal durch ein Zufallsverfahren ausgewählt und dort angezeigt, vom Benutzer abgelesen und in das Bedienteil eingegeben wird, woraufhin Terminal und Bedienteil eine Nachricht mittels des Identifikators verschlüsseln.

19. Verfahren nach einem der vorhergehenden Ansprüche, wobei die Verbindung zwischen Bedienteil und Terminal durch nur für die Zeitdauer der Verbindung gültige Schlüssel verschlüsselt wird und bei der Bildung dieser Schlüssel der Identifikator verwendet wird.

20. Verfahren nach dem vorherigen Anspruch, wobei der Identifikator in Terminal und Bedienteil jeweils genau einmal zur Bestimmung eines Sitzungsschlüssels verwendet wird.

21. Verfahren nach einem der vorhergehenden Ansprüche, wobei ein Nahfeldnetzwerk verwendet wird, welches die Bildung von geschlossenen Teilnetzen unterstützt und die Verbindung zwischen Bedienteil und Terminal als ein solches geschlossenes Teilnetz aufgebaut wird.

22. Verfahren nach einem der Ansprüche 1 bis 9, wobei die Kontrollausgabe über eine von dem Nahbereichsnetzwerk unabhängige drahtlose Datenübertragung an den Absender zurückgeschickt und auf Gleichheit überprüft wird, wobei diese Datenübertragung durch Richtwirkung oder geringe Signalstärke nur dann wirksam ist, wenn sich das Bedienteil unmittelbar vor dem Terminal befindet.

23. Softwareprodukt, welches den auf dem Terminal bzw. Bedienteil ablaufenden Teil eines der Verfahren nach den vorherigen Ansprüche durchführt.

24. Tragbares Bedienteil für die Bedienung eines Terminals über ein drahtloses Nahbereichsnetzwerk, welches umfaßt:
- Mittel zum Senden einer Erstanfrage an eine vorbestimmte Zieladresse im Nahbereichsnetzwerk,
- Mittel zum Empfangen einer Antwort auf die Erstanfrage und Entnahme mindestens einer Netzwerkadresse eines freien Terminals,
- Mittel zum Aufbau einer Netzwerkverbindung zu der Netzwerkadresse und zum Empfangen eines Identifikators,
- Mittel zur Verifikation des Identifikators durch den das Bedienteil benutzenden Benutzer.

25. Bedienteil nach dem vorherigen Anspruch mit Mitteln zur Durchführung des auf das Bedienteil entfallenden Teils eines der Verfahren nach Anspruch 1 bis 22.

26. Terminal zur Bedienung durch ein tragbares Bedienteil über ein drahtloses Nahbereichsnetzwerk, welches umfaßt:
- Mittel zum Aktzeptieren des Aufbaus einer Netzwerkverbindung von dem Bedienteil und zum Empfangen eines Identifikators,
- Mittel zur Verifikation des Identifikators durch den das Bedienteil benutzenden Benutzer.

27. Terminal nach dem vorherigen Anspruch mit Mitteln zur Durchführung des auf ein Terminal entfallenden Teils eines der Verfahren nach Anspruch 1 bis 22.
